# EUROPÄISCHE PATENTSCHRIFT

(11) **EP 1 485 250 B1**
(45) Veröffentlichungstag und Bekanntmachung des Hinweises auf die Patenterteilung: **14.12.2005**
(21) Anmeldenummer: 03740388.8
(22) Anmeldetag: 30.06.2003
(51) Int. Cl.: B32B 17/10, C08F 20/12, C08F 20/14

(54) **LARMSCHUTZPLATTE AUS ACRYLGLAS**
NOISE PREVENTION PLATE CONSISTING OF ACRYLIC GLASS
PANNEAU ANTIBRUIT EN VERRE ACRYLIQUE

(30) Priorität: 20.08.2002 DE 10238992
(43) Veröffentlichungstag der Anmeldung: 15.12.2004
(73) Patentinhaber: Röhm GmbH & Co. KG, 64293 Darmstadt (DE)
(72) Erfinder: SCHÖLA, Egbert, A-2500 Baden (AT); MOLNAR, Gerald, A-2440 Gramatsneusiedl (AT); HAMPL, Gerd, A-2460 Bruck/Leitha (AT); SEELMANN, Peter, A-1238 Wien (AT); RUZICKA, Mojmir, A-1020 Wien (AT)
(86) Internationale Anmeldenummer: PCT/EP2003/006939
(87) Internationale Veröffentlichungsnummer: WO 2004/018196

(56) Entgegenhaltungen:
- EP-A- 0 078 640
- EP-A- 0 516 299
- US-A- 3 780 156
- US-A- 5 985 972
- US-B1- 6 305 492

## Beschreibung

Die vorliegende Erfindung betrifft Platten aus Acrylglas sowie deren Verwendung als Schallschutzplatte, insbesondere als Element von Lärmschutzwänden.

Beim Schutz der Bürger vor Verkehrslärm werden seit Jahren Lärmschutzwälle, -wände oder Lärmschutzfassaden eingesetzt. Wegen des großen Platzbedarfs von Wällen werden diese vorzugsweise im freien Gelände aufgeschüttet, im innerstädtischen Bereich, bei Brückenbauwerken und häufig auch bei Schienenstrecken kommen dagegen Lärmschutzwände oder -fassaden zum Einsatz.

Für Platz sparende Lärmschutzwände haben sich in den vergangenen Jahren in der Praxis Materialien wie Holz, Metall und Beton im nichttransparenten Sektor sowie Mineralgläser als auch Kunststoffe im transparenten Sektor, durchgesetzt.

Transparente Lärmschutzwände aus Kunststoffmaterialien werden insbesondere aus Polymethylmethacrylat (PMMA) gefertigt bzw. aus auf PMMA basierenden Formmassen, da dieses Material neben einer hervorragenden Transparenz und ausgezeichneten optischen Eigenschaften über eine exzellente Schalldämmung bei guten physikalisch-mechanischen Eigenschaften (Steinwurfresistenz) verfügt.

Nachteilig bei transparenten Lärmschutzwänden ist sicherlich deren relativ hoher Preis, so dass transparente Elemente im Allgemeinen nur dann eingesetzt werden, wenn es darum geht, den Autofahrer oder den Fahrgast eines Schienenfahrzeugs trotz hoher Wände nicht gänzlich von der Umwelt auszuschließen. Dies dient beispielsweise zur Vorbeugung gegen einen möglichen "Tunneleffekt" auf Brücken, wobei man unter anderem nicht zuletzt wegen des hohen Preises auch dazu übergegangen ist, diese Wände dann nur teilweise transparent auszuführen.

Es besteht demnach ein erheblicher Bedarf nach Platz sparenden Elementen mit den hervorragenden Schalldämmungs- und den brauchbaren mechanischen Eigenschaften von Acrylglas, wobei die Elemente dennoch kostengünstig sein sollen. Nach Möglichkeit sollen die Elemente deutlich preisgünstiger sein als die bekannten Acrylglasplatten. Daneben fordert die Praxis schon lange geeignete Elemente, die als nicht transparente Elemente einfach mit den transparenten Lärmschutzplatten aus Acrylglas kombinierbar sind, die insbesondere mit einer identischen Verlege- und Befestigungstechnik einsetzbar sind.

Hinzu kommt, dass die bekannten, transparenten Kunststofflärmschutzplatten regelmäßig aus Acrylglas mit Abmessungen von etwa 2 x 2 m bestehen, wodurch sich bei größeren Lärmschutzwänden ein entsprechender Pfostenabstand von einem zum nächsten Element der Wand ergibt. Will man den Pfostenabstand vergrößern, z. B. auf 3 x 2 m oder 4 x 2 m, so macht dies den Einsatz von stärkeren Platten notwendig. Trotzdem zeigen Windlastberechnungen, dass für bestimmte extreme Windlasten selbst ein Einsatz von Acrylglas mit Dicken von 25, 30 oder 35 mm nicht ausreicht, den Anforderungen gerecht zu werden, abgesehen vom hohen Preis entsprechend dicker Acrylglasplatten.

Demnach wäre es ebenfalls wünschenswert, die mechanischen Eigenschaften, beispielsweise den E-Modul, der neuen Lärmschutzplatten im Vergleich zu bekannten Acrylglasplatten für den Lärmschutz weiter zu verbessern, um so einen größeren Pfostenabstand möglich zu machen und durch diese Maßnahme die Gesamtkosten von Lärmschutzwänden weiter zu reduzieren.

Des Weiteren war es eine Aufgabe der Erfindung, eine für die Verwendung als Lärmschutzelement geeignete Platte bereitzustellen, die den schönen ästhetischen Eindruck einer Lärmschutzwand aus transparentem Acrylglas nicht oder nur in geringem Maß beeinträchtigt.

Ein weiteres Ziel der vorliegenden Erfindung bestand darin, Lärm dämmende Platten zu schaffen, die eine besonders hohe Witterungsbeständigkeit aufweisen und die gegebenenfalls auch als selbst reinigende Systeme ausgeführt werden können.

Schließlich besteht gerade bei den Schallschutzplatten aus Kunststoff noch ein weiteres Problem. Werden diese Platten an Fahrbahnen eingesetzt, kann beim Aufprall eines Fahrzeugs auf das Lärmschutzelement die ernstliche Gefahr bestehen, dass sich gefährliche Splitter bilden oder dass sich die Kunststoffelemente entzünden. Dabei kann die Gefährdung, die von Splittern oder brennenden Lärmschutzelementen ausgeht, sehr schwerwiegend sein. Es besteht mithin ein dringender Bedarf nach Lärmschutzplatten aus Kunststoff mit erhöhter Splitterbildungs- und Brandsicherheit.

Gelöst werden diese Aufgaben sowie weitere, die zwar nicht wörtlich genannt werden, sich aber aus den hierin diskutierten Zusammenhängen wie selbstverständlich ableiten lassen oder sich aus diesen zwangsläufig ergeben, durch die in Anspruch 1 beschriebene Platte aus Acrylglas.

Zweckmäßige Abwandlungen der erfindungsgemäßen Lärmschutzptatten werden in den auf Anspruch 1 zurück bezogenen Unteransprüchen unter Schutz gestellt.

Hinsichtlich einer Verwendung der erfindungsgemäßen Platten liefert der Anspruch der entsprechenden Kategorie eine Lösung der zugrunde liegenden Aufgabe.

Dadurch, dass eine Acrylglasplatte mit den Abmessungen Größe 2 x 2 m oder größer und einer Stärke (Dicke) von mehr als 8 mm, vorzugsweise mehr als 12 mm, und mit in das Acrylglas zur Splitterbindung im Falle eines Bruches eingebetteten Fäden, Bändern, Gittern oder Netzen aus einem mit dem Acrylglas unverträglichen Material, einen auf das Gesamtgewicht der Platte (vermindert um das Gewicht der eingebetteten Materialien) bezogenen Anteil an nicht transparenten Füllstoffen im Bereich von 40 bis 80 Gewichtsprozent aufweist, gelingt es auf nicht ohne weiteres vorhersehbare Weise, ein lärmdämmendes nicht transparentes Plattenelement für den Einsatz in Lärmschutzwänden (LSW) zur Verfügung zu stellen, das in idealer Weise mit bereits bekannten transparenten Lärmschutzplatten aus Acrylglas kombinierbar ist und eine ganze Reihe weiterer zum Teil sehr überraschender Vorteile aufweist.

An erster Stelle sind dabei die herausragenden mechanischen Eigenschaften der erfindungsgemäßen Lärmschutzplatte aus Acrylglas zu nennen. So findet man bei der nicht transparenten Platte gemäß der Erfindung Werte für Zugfestigkeit, Reißdehnung, E-Modul (Zug), Biegefestigkeit, E-Modul (Biege) und thermischen Ausdehnungskoeffizienten, welche den entsprechenden Werten bei transparentem Lärmschutzmaterial aus Acrylglas bei gleicher Plattenabmessung und Stärke zum Teil deutlich überlegen sind.

Als sehr vorteilhaft hat sich der hohe E-Modul der erfindungsgemäßen nicht transparenten Lärmschutzplatte aus Acrylglas erwiesen. Der höhere E-Modul im Vergleich zur transparenten Lärmschutzplatte aus ungefülltem Acrylglas erlaubt bei der Errichtung einer Lärmschutzwand einen größeren Stützen- oder Pfostenabstand. Damit können die Gesamtkosten einer Lärmschutzwand reduziert werden.

Im Übrigen ermöglichen die erfindungsgemäßen LSW-Platten im Vergleich zu bekannten transparenten LSW-Acrylglasplatten bei den derzeit üblichen Abmessungen eine deutliche Reduktion der Dicke der Platten ohne dabei eine Verschlechterung der mechanischen und schalltechnischen Eigenschaften in Kauf nehmen zu müssen. Das erwünschte Schalldämm-Maß wird durch das hohe Flächengewicht trotz verringerter Plattendicke gewährleistet.

Darüber hinaus sind die Füllstoffe im Allgemeinen deutlich preisgünstiger als das Matrixmaterial Acrylglas, so dass auch durch den hohen Füllstoffgehalt eine deutlich Senkung der Kosten erreicht wird.

Die hoch gefüllten Platten der Erfindung haben zudem ein verbessertes Brandverhalten, was bedeutet, dass sie feuerbeständig gemäß ZTV LSW 88 sind, zusätzlich aber auch der Brandklasse B2 angehören, d.h. es nur zu geringer Rauchentwicklung und Brandausweitung im Brandfall kommt. Überraschenderweise ist es aber auch möglich, mit den erfindungsgemäßen nicht transparenten Lärmschutzplatten (NT-Lärmschutzplatten) aus hoch gefülltem Acrylglas die Brandklasse B1 zu erreichen, sofern geeignete Füllstoffe, wie z.B. Aluminiumhydroxid und dergleichen zum Einsatz kommen.

Daneben ist es auch äußerst ungewöhnlich, dass es trotz des relativ hohen Anteils an Füllstoffen mit der erfindungsgemäßen Platte gelingt, die Splittersicherheit von transparenten Acrylglasplatten zu erreichen, sobald entsprechende Splitterbindungssysteme verwendet werden. Trotz der höheren Sprödigkeit der hochgefüllten Kunststoffmaterialien erfüllen beispielsweise eingebettete Splitterbindungssysteme wie Polyamidfäden, Stahlseile, die vorzugsweise Kunststoff ummantelt sind oder ähnliche Systeme, in erfindungsgemäßen Platten einwandfrei alle an solche Systeme gestellten Forderungen.

Schließlich sind die Anforderungen an die Qualität des Matrixmaterials Acrylglas bei der erfindungsgemäßen nicht transparenten Platte geringer als bei herkömmlichen transparenten LSW-Platten aus Acrylglas. Hierdurch eröffnet sich eine überraschende Recycling-Möglichkeit. Die nicht transparente Lärmschutzplatte selbst, entstehende Produktionsabfälle, Verschnitt, retournierte Lärmschutzplatten nach Nutzungsdauer und sonstige Abfälle aus der Produktion, können, nach Zerkleinerung und Vermahlung auf eine gewünschte Teilchengröße, vorzugsweise etwa 50 µm, wieder als Rohstoff für die Produktion eingesetzt werden.

Im Rahmen der Erfindung soll eine Lärmschutzplatte aus Acrylglas eine Platte aus Acrylglas sein, die als plattenförmiges Element Bestandteil einer Lärmschutzwand sein kann.

Unter dem Begriff "Platten" sollen flächige Gebilde beliebiger Geometrie verstanden werden, die beispielsweise rund, eckig, halbrund oder auf sonstige Weise geformt sein können. Bevorzugt sind die Platten jedoch quadratisch oder rechteckig. Die Ecken oder Kanten der Platten können abgerundet oder abgeflacht sein.

Die Platten aus Acrylglas gemäß der Erfindung haben bestimmte Mindestabmessungen. Es handelt sich hierbei um eine Größe von 2 x 2 m oder größer. Aufgrund der hohen mechanischen Stabilität der gefüllten Acrylglasplatten sind Abmessungen von 3 x 2 m oder 4 x 2 m bevorzugt. Es sind jedoch auch größere Abmessungen möglich ebenso wie alle Zwischenmaße realisiert werden können, sei es direkt beim Herstellprozess der Platten oder im Anschluss daran durch Nachbearbeitung fertig gegossener Platten. Sofern sich die Erfindung nicht auf quadratische oder rechteckige Platten bezieht, ist unter einer "Größe" von 2 x 2 m zu verstehen, dass die rund oder unregelmäßig geformte Platte eine entsprechend große quadratische Fläche umfasst oder einschließt oder dass die runde oder unregelmäßige Platte wenigstens eine Fläche von 4 m² besitzt.

Die relativ große Größe erfindungsgemäßer Platten ist ebenso charakteristisch wie die Dicke von mehr als 8 mm, vorzugsweise mehr als 12 mm, was die Lärmschutzplatten der Erfindung klar von Halbzeugen oder anderen kleineren Platten unterscheidet. Die Dicke ist insofern von charakteristischer Bedeutung, als nur durch entsprechende Dicken die notwendigen Schalldämm-Maße erreichbar sind. Typische Dicken liegen bei mehr als 8 mm, bevorzugt mehr als 10 mm, besonders bevorzugt mehr als 12 mm, vorzugsweise im Bereich von 8 bis 40 mm, zweckmäßig im Bereich von 10 bis 40 mm, noch zweckmäßiger im Bereich von 12 bis 35 mm, besonders bevorzugt sind 15 bis 30 mm dicke Platten für den LSW-Bereich. Es können jedoch auch Platten mit einer Dicke von 40 mm oder sogar noch dicker gefertigt werden, je nach angestrebtem Ziel, für spezielle Anwendungen sind auch größere oder kleinere Ausführungen möglich.

Die Kunststoffplatten der Erfindung weisen eine hochgefüllte Matrix aus Acrylglas auf. Diese Platten können beispielsweise aus Methylmethacrylat-Sirup gegossen werden. "Gefülltes" Acrylglas bedeutet ein Acrylglas, welches Füllstoffe aufweist. "Hochgefüllt bedeutet, einen Gehalt an Füllstoffen, bezogen auf das Gesamtgewicht der Platte aus Acrylglas im Bereich von 40 bis 80 Gewichtsprozent Das "Gesamtgewicht" der Platte meint im Rahmen der Erfindung die Summe der Gewichte aller am Aufbau der Platte beteiligten Stoffe abzüglich der zur Splitterbindung eingebetteten Materialien wie Fäden, Bänder, Netze und Gitter. Ist der Füllstoffgehalt unterhalb von 40 Gewichtsprozent steht der Verlust an Transparenz in keinem Verhältnis zur Verbesserung der mechanischen Eigenschaften sowie zur Kosteneinsparung, liegt der Füllstoffgehalt über 80 Gewichtsprozent werden die Platten leicht spröde und können reißen, d.h. die Matrix verliert ihre Eigenschaft, die Füllstoffpartikel dauerhaft zu binden. Ein besonders ausgewogenes Eigenschaftsspektrum weisen Platten mit einem Füllstoffgehalt im Bereich von 50 bis 60 Gewichtsprozent auf.

Art und Form der in der Lärm dämmenden Platte der Erfindung enthaltenen Füllstoffe können je nach anzustrebendem speziellem Einsatzzweck über einen weiten Bereich variiert werden. Zu den vorteilhaft bei der Herstellung der Lärm dämmenden Platte der Erfindung einsetzbaren Füllstoffen gehören unter anderem Talk, Dolomit, natürliche Verwachsungen von Talk und Dolomit, Glimmer, Quarz, Chlorit, Aluminiumoxid, Aluminiumhydroxid, Tone, Siliziumdioxid, Silikate, Carbonate, Phosphate, Sulfate, Sulfide, Oxide, Metalloxide, Glasmehl, Glaskugeln, Keramik, Kaolin, Porzellan, Cristobalit, Feldspalt und/oder Kreide.

Grundsätzlich sind auch silanisierte Typen von Füllstoffen bevorzugt, da durch die Silanisierung eine bessere Matrixhaftung erreichbar ist, verglichen mit Füllstoffen, die nicht silanisiert sind.

Besonderes Interesse unter den Füllstoffsorten genießen Mineralien die Glimmer (mica), Chlorit (chlorite), Quarz (quartz) aufweisen, wie etwa ®Plastorit-Typen der Firma Naintsch, Verwachsungen von Talk mit Dolomit, insbesondere Verwachsungen von weißem Talk mit reinem Dolomit, BC-Microtypen der Firma Naintsch, ®DORSILIT-Kristallquarzmehl der Firma Dorfner, ®SIL-CELL mikrozellulare Additivkombinationen der Firma Stauss, St. Pölten und ®Apyral-Typen (Aluminiumhydroxide) der Firma Nabaltec.

Von besonderem Vorteil ist ein Spezialextender SE (Verwachsung von Talk und Dolomit) in einem Konzentrationsbereich von 40 bis 80 %. Platten mit höherem Füllstoffgehalt haben, wie bereits erwähnt, günstigere Herstellkosten und verbesserte mechanische Eigenschaften (E-Modul). Zudem zeigen jedoch die höher gefüllten Platten im Brandfall einen geringeren Brandfortschritt sowie geringere Rauchentwicklung.

Das Brandverhalten erfindungsgemäßer Platten lässt sich noch weiter dadurch verbessern, dass man Mischungen aus Spezialextender SE und Aluminiumhydroxid einsetzt. Das Aluminiumhydroxid kann im Brandfall durch Abspaltung von Wasser einen selbstlöschenden Effekt haben. Dabei ist auch der Feinheitsgrad des Aluminiumhydroxids von besonderer Bedeutung. Feines Aluminiumhydroxid ist grundsätzlich geeigneter als grobe Typen, da es im Brandfall nicht nur chemisch gebundenes Wasser, sondern auch die absorbiert gebundene Feuchtigkeit freisetzen.

Die genannten Füllstoffsorten können unterschiedliche Morphologien aufweisen. Sie können sphärisch oder asphärisch sein, wobei faser- oder splitterförmige Füllstoffe, insbesondere laminare Geometrien, bevorzugt sind. Vorteilhafte Acrylglasplatten für den LSW-Bereich mit besonders guten Eigenschaftskombinationen werden dann erhalten, wenn die enthaltenen verstärkenden Füllstoffe eine plättchenartige oder nadelartige Form aufweisen. Je laminarer die Geometrie der Füllstoffe ist desto höher ist die Schlagzähigkeit und desto geringer der E-Modul der Platte.

Eine besondere Ausführungsform der erfindungsgemäß resultierenden Platte liegt dann vor, wenn die eingesetzten Füllstoffpartikel Schichtfüllstoffe sind. Hierunter werden im Sinne der Erfindung solche Füllstoffe verstanden, die eine Vorzugs-Orientierung beim Gießvorgang (Herstellung der Platte im Gießverfahren, Gussglas) einnehmen können.

Auch die Größe der Füllstoffpartikel kann eine Rolle für die Qualität der erfindungsgemäßen Platten spielen. So kann durch eine geeignete Größe der Füllstoffe die Steifigkeit der Platte gesteuert werden. Je feiner der Füllstoff ist, umso höher sind der Elastizitätsmodul der Platte und deren Schlagzähigkeit. Die Füllstoffe werden allgemein im Komgrößenbereich von etwa 0,01 bis etwa 100 *µ*m eingesetzt. Zweckmäßig ist die mittlere Partikelgröße des eingesetzten Füllstoffs im Bereich von 0,01 bis 80 *µ*m, insbesondere im Bereich von 0,05 bis 30 *µ*m, ganz besonders zweckmäßig im Bereich von 0,1 bis 20 *µ*m.

Je feiner die eingesetzten verstärkenden Füllstoffe sind, umso höher sind Steifigkeit und Schlagfestigkeit der Platte. Bei größeren Füllstoffen werden die resultierenden Platten spröder. Besonders vorteilhafte Acrylglasplatten sind gemäß der Erfindung dadurch gekennzeichnet, dass der Rückstand der eingesetzten Füllstoffe bei einer 20 *µ*m Siebung weniger als zwei Gewichtsprozent ist. Ganz besonders zweckmäßig werden Füllstoffe eingesetzt, bei denen der Rückstand der eingesetzten Füllstoffe bei einer 12 µm Siebung weniger als zwei Gewichtsprozent beträgt.

Die erfindungsgemäßen Platten sind beispielsweise durch Polymerisation eines (Meth)acrylat-Systems in einem Gießverfahren, vorzugsweise nach dem Kammerverfahren oder nach einer seiner Abarten, erhältlich, wobei das polymerisierbare System:
A)

| | |
|---|---|
| a) (Meth)acrylat | 50 - 100 Gew.-% |
| a1) Methyl(meth)acrylat | 0 - 99,99 Gew.-% |
| a2) C₂-C₄ (Meth)acrylat | 0 - 99,99 Gew.-% |
| a3) ≥ C₅ (Meth)acrylat | 0 - 50 Gew.% |
| a4) mehrwertige (Meth)acrylate | 0,01 - 50 Gew.-% |
| b) Comonomere | 0 - 50 Gew.-% |
| b1) Vinylaromaten | 0 - 50 Gew.-% |
| b2) Vinylester | 0 - 50 Gew.-%, |

wobei die Komponenten a) und b) so gewählt sind, daß sie zusammen 100 Gewichtsprozent der polymerisierbaren Komponente A) ergeben,
B) auf 1 Gew.-Teil A) 0 -12 Gew.-Teile eines in A) löslichen oder quellbaren (Pre)polymers,
C) Initiator in einer Menge ausreichend zur Härtung der polymerisierbaren Komponente A),
D) gegebenenfalls Mittel zur Einstellung der Viskosität des Systems,
E) übliche Additive in einer Menge bis zu 3 Gew.-Teile auf 1 Gewichtsteil A)
und
F) 0,33 bis 4 Gew.-Teile Füllstoffe auf 1 Gew.-Teil Bindemittel (Summe aus A) bis E)) enthält
und wobei die Viskosität des polymerisierbaren Systems vor der Polymerisation größer als 0,1 Pa•s (100 cP) ist.

Im Sinne der Erfindung ist eine homogene Verteilung der Füllstoffe über die gesamte Platte erwünscht. Zur Erzielung einer solchen Verteilung kann man beispielsweise die Viskosität des zum Erhalt der Platte zu polymerisierenden (Meth)acrylat-Systems ausnutzen. Vorzugsweise ist die erfindungsgemäße Platte durch Polymerisation eines (Meth)acrylat-Systems erhältlich, welches vor der Polymerisation eine Viskosität von größer als 0,1 Pa•s (100 cP) aufweist. Die relativ hohe Viskosität des Polymerisationssystems wirkt einer Sedimentation der Füllstoffe während der Polymerisation entgegen. Zugleich kann die Sedimentation auch durch die Feinheit der Füllstoffe beeinflusst werden. Gröbere Füllstoffe neigen zur Sedimentation, was eine "Verschüsselung" der Lärmschutzplatte nach sich zieht. Hier kann man neben dem Einsatz von Feinfüllstoffen gezielt auch durch die Verwendung eines Thixotropierungsmittels entgegen wirken.

Zur Erfindung gehört mithin auch ein Verfahren zur Herstellung einer nicht transparenten Acrylglasplatte, bei welchem man
a) eine polymerisierbare, gefüllte (Meth)acrylat-Zusammensetzung bereitstellt,
b) die bereitgestellte Zusammensetzung in eine vorbereitete Form gießt, in welcher die zur Einbettung vorgesehenen Fäden, Bänder, Gitter oder Netze positioniert sind,
c) die Zusammensetzung in der Form bei einer Temperatur oberhalb Raumtemperatur unter Erhalt einer Platte polymerisiert und
d) die Platte entformt,
wobei das Verfahren dadurch gekennzeichnet ist,
dass man die Viskosität der polymerisierbaren, hochgefüllten (Meth)acrylat-Zusammensetzung vor der Polymerisation in der Form auf einen Wert vom größer als 0,1 Pa•s (100 cP) einstellt.

Eine erste zweckmäßige Verfahrenvariante der Erfindung kennzeichnet sich dadurch, dass man die Viskosität der polymerisierbaren Zusammensetzung durch Variation des Gewichtsverhältnisses von (Pre)polymer zu polymerisierbaren Monomeren in der Zusammensetzung reguliert.

Alternativ hierzu oder in Kombination damit kann es auch von Vorteil sein, dass man die Viskosität der Zusammensetzung durch Variation des Anteils an die Viskosität einstellenden Mitteln reguliert. Solche die Viskosität einstellenden, d.h. regulierenden Mittel sind dem Fachmann an sich bekannt. Hierzu gehören beispielsweise ionische, nichtionische und zwitterionische Emulgatoren.

Weitere zweckmäßige Mittel oder Verfahren zur Beeinflussung und/oder Einstellung der Viskosität der polymerisierbaren Zusammensetzung umfassen unter anderem folgende Maßnahmen:

Die Viskosität des Polymerisationssystems kann durch Reglerzusatz variiert werden.

Es kann vorteilhaft sein, die Viskosität des Polymerisationssystems über das Mischungsverhältnis zwischen (Pre)polymer (Vorpolymerisat) und monomeren, polymerisierbaren Bestandteilen des Polymerisationssystems zu steuern.

Art und Menge von Netzmittelzusätzen wie Lecithin oder auch ®Catafor und dergleichen, können die Einstellung der Viskosität auf den gewünschten Wert ermöglichen.

Die Füllstoffkonzentration als solche beeinflusst die Viskosität des Polymerisationssystems, ebenso wie die Art des Füllstoffs oder der Füllstoffmischung (Korngröße, Ölzahl, Oberflächenbehandlung).

Des Weiteren können übliche Zusätze wie zum Beispiel Thixotropierungsmittel (beispielsweise ®Aerosile) die Viskosität des Polymerisationssystems verändern.

Des Weiteren kann über die Polymerisationstemperatur Einfluss auf die Viskosität des Systems genommen werden.

Schließlich können auch die Initiatorkonzentration und die Kinetik der Polymerisationsreaktion einen Einfluss auf die Viskosität des Polymerisationssystems und damit den Sedimentationsgrad der Füllstoffe ausüben.

In die mit Füllstoff hergestellten, nicht transparenten Lärmschutzplatten aus Acrylglas (Lärmschutzplatten NT) sind in die Acrylglasmatrix verstärkende Elemente (Fäden, Bänder, Netze, Gitter) aus mit dem Matrixmaterial nicht verträglichen Materialien, vorzugsweise mit dem Acrylglas nicht verträgliche Kunststoffe, flächig (Gitter, Netze) oder auch in Fadenform (Fäden, Bänder) eingebracht.

Mit dem Acrylglas der Matrix nicht verträgliche (unverträgliche oder inkompatible) Materialien soll in diesem Zusammenhang bedeuten, dass die Materialien der Matrix und das eingebettete Material sich unter den Herstell- und Einsatzbedingungen der Platte nicht ohne Ausbildung einer Phasengrenze miteinander mischen.

Dementsprechend eignen sich zur Splitterbindung in Bruchfall der Lärmschutzplatte in einer Ausführungsform der Erfindung insbesondere in die Matrix aus Acrylglas eingebettete Fäden, Bänder, Gitter oder Netze aus Polyamid, Polyester und/oder Polypropylen.

Erfindungsgemäße Acrylglasplatten kennzeichnen sich dabei in einer weiteren besonderen Variante dadurch, dass sie zur Splitterbindung im Bruchfall in die hochgefüllte Kunststoffmatrix eingebettete Fäden aus Polyamid aufweisen.

Die Herstellung solcher Kunststoffplatten kann auf jede dem Fachmann geläufige Weise geschehen.

Dabei kann man z. B. so vorgehen, daß man mit zwei vorgefertigten gegossenen Kunststoffplatten, z. B. Acrylglasplatten (2000 mm x 1220 mm x 8 mm) mit Hilfe einer 4 mm starken umlaufenden Dichtung eine Kammer bildet. In diese Kammer werden dann etwa mittig oder auch gezielt außermittig im Abstand von jeweils 30 mm parallel zueinander monofile Kunststoffäden, z. B. Polyamidfäden, mit einem Durchmesser von beispielsweise 0,9 mm eingespannt. Dann wird in die Kammer ein niedrigviskoses, einen äußeren Weichmacher auf der Basis eines Zitronensäureesters und ein Redoxinitiatorsystem enthaltendes kalthärtendes Methacrylatharz eingefüllt.

Nach vollständiger Aushärtung der Zwischenschicht und Entfernung der Glasscheiben erhält man eine Kunststoffscheibe.

Die erfindungsgemäßen Lärmschutzplatten NT aus nicht transparentem, hoch gefüllten Acrylglas können auch mit wenig Aufwand zu einem tauglichen Rückhaltesystem werden. Im Rahmen der vorliegenden Erfindung bezeichnet der Begriff Rückhaltesystem eine Vorrichtung, die geeignet ist, einen auftreffenden Gegenstand, beispielsweise ein Fahrzeug, am Durchbrechen der Vorrichtung zu hindern. Gemäß einer bevorzugten Ausführungsform kann ein erfindungsgemäßes Rückhaltesystem verhindem, dass ein senkrecht auf das System aufprallender Gegenstand, der eine Geschwindigkeit von mindestens 5, vorzugsweise mindestens 7 Meter pro Sekunde und eine Energie von mindestens 5000 Joule, vorzugsweise mindestens 7000 Joule aufweist, das System durchbricht und so wirksam zurückgehalten wird.

Zu diesem Zweck enthält die erfindungsgemäße Lärmschutzplatte NT mindestens ein eingebettetes Metallseil, wobei zwischen der Oberfläche des Metallseils und der transparenten Acrylglasmatrix zumindest teilweise eine Kunststoffschicht vorgesehen ist. Hierdurch gelingt es auf überraschende und nicht ohne weiteres vorhersehbare Weise, ein Lärm dämmendes Rückhaltesystem zur Verfügung zu stellen, das besonders kostengünstig gewartet und montiert werden kann. Hierbei ist zu berücksichtigen, dass ein zusätzlicher Montageschritt entfällt und die Lärmschutzwand im Vergleich zu herkömmlichen Rückhaltesystemen praktisch wartungsfrei ist.

Auszugskräfte für den Stahldraht aus der Acrylglasmatrix der hoch gefüllten, nicht transparenten Acrylglasplatte sind im allgemeinen größer als 50 N, vorzugsweise größer als 100 N, ohne dass hierdurch eine Beschränkung erfolgen soll. Diese Kraft wird auf bekannte Weise bestimmt, indem freiliegendes Metallseil mit Kräften belastet wird. Die zum Auszug der Seile mindestens notwendige Kraft wird als Auszugskraft definiert.

Die Acrylglasplatte der Erfindung ist in bevorzugter Ausführungsform daher dadurch gekennzeichnet, dass sie zur Splitterbindung im Bruchfall und als Rückhaltesystem in die hochgefüllte Kunststoffmatrix eingebettete Stahlfäden aufweist, die gegebenenfalls mit Kunststoff ummantelt, vorzugsweise mit Kunststoff aus Polyamid ummantelt, sind.

Bei den erfindungsgemäßen Platten handelt es sich um Poly(meth)acrylat-Platten. Diese zeichnen sich durch einen hohen, vorzugsweise überwiegenden, also relativ hohen Gehalt von 50 Gewichtsprozent oder mehr, an Poly(meth)acrylaten aus. Poly(meth)acrylate sind Polymere von denen angenommen wird, dass sie Struktureinheiten der Formel (I) aufweisen 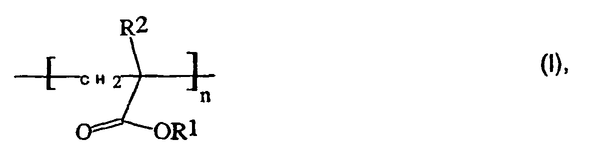 worin
R¹ ein organischer Rest, vorzugsweise C₁₋₆-Alkyl, bevorzugt C₁₋₄-Alkyl,
R² H, C₁₋₆-Alkyl, bevorzugt H oder C₁₋₄-Alkyl, ganz besonders bevorzugt
H oder CH₃, und
n eine positive ganze Zahl größer 1
sind.

C₁₋₄-Alkyl umfasst lineare und verzweigte Alkylreste mit eins bis vier Kohlenstoffatomen. Insbesondere von Interesse sind Methyl, Ethyl, n-Propyl, iso-Propyl, n-Butyl, 2-Methyl-1-propyl, sek.-Butyl, 2-Methyl-2-propyl.

C₁₋₆-Alkyl umfasst die bei C₁₋₄-Alkyl genannten Reste und zusätzlich Reste mit 5 oder 6 Kohlenstoffatomen, wie vorzugsweise 1-Pentyl, 2-Pentyl, 3-Pentyl, 2,2-Dimethyl-1-propyl, 3-Methyl-1-butyl, 3-Methyl-2-butyl, 2-Methyl-2-butyl, 2-Methyl-1-butyl, 1-Hexyl.

Zu beispielhaften Verbindungen, welche die vorgenannte Struktureinheit aufweisen, gehören neben anderen Polymethylacrylat, Polyethylacrylat, Polymethylmethacrylat, Polypropylacrylat, Polybutylacrylat, Polypropylmethacrylat, Polybutylmethacrylat und Copolymere, die zwei oder mehrere dieser Polymersorten aufweisen. Die ersten vier Verbindungen sind im Rahmen der Erfindung bevorzugt. Ganz besonders bevorzugt ist Polymethylmethacrylat (PMMA).

Neben den chemischen Mischungen (statistische Copolymere oder auch Blockcopolymere), die durch Copolymerisation von wenigstens zwei substituierten oder unsubstituierten Acrylsäureestermonomeren entstanden sind (z. B. Methylmethacrylat-n-Butylmethacrylat-Copolymere), lassen sich im Rahmen der Erfindung auch Poly(meth)acrylatplatten aus Copolymeren verwenden, die bis zu 50 Gew.% wenigstens eines weiteren vinylisch ungesättigten Monomeren aufweisen, welches mit wenigstens einem substituierten oder unsubstituierten Acrylsäureestermonomeren copolymerisierbar ist.

Beispiele hierfür sind u. a. Methylmethacrylat-Styrol-Copolymere oder Methylmethacrylat-Butylacrylat-Styrol-Terpolymere.

Es handelt sich bei den Comonomeren um optionale Bestandteile oder Komponenten, die vorzugsweise in untergeordneter Menge in Form von sie aufweisenden Copolymeren im Acrylglas enthalten sind. Sie werden in der Regel so ausgewählt, daß sie keinen nachteiligen Effekt auf die Eigenschaften des erfindungsgemäß zu verwendenden Poly(meth)acrylats haben.

Das erwähnte oder die erwähnten Comonomeren kann bzw. können u. a. dazu eingesetzt werden, die Eigenschaften des Copolymeren auf erwünschte Weise zu modifizieren, beispielsweise durch Steigerungen oder Verbesserungen der Fließeigenschaften, wenn das Copolymer im Rahmen seiner Verarbeitung höheren Temperaturen ausgesetzt wird, oder zur Reduzierung einer Restfarbe im Copolymer oder durch Verwendung eines polyfunktionellen Monomeren, um auf diese Art und Weise ein gewisses oder definiertes Maß an Vernetzung in das Copolymer einzuführen.

Zu für diesen Zweck geeigneten Monomeren gehören u. a. Vinylester, Vinylchlorid, Vinylidenchlorid, Styrol, α-Methylstyrol und die verschiedenen halogensubstituierten Styrole, Vinyl-und Isopropenylether, Diene, wie beispielsweise 1,3-Butadien und Divinylbenzol. Die Farbverminderung des Copolymeren kann beispielsweise besonders bevorzugt durch Einsatz eines elektronenreichen Monomeren, wie beispielsweise eines Vinylethers, Vinylacetat, Styrol oder α-Methylstryrol, erreicht werden.

Besonders bevorzugt unter den genannten Comonomer-Verbindungen sind aromatische Vinylmonomere, wie beispielsweise Styrol oder α-Methylstyrol.

Auch physikalische Mischungen, sogenannte Blends, sind für die Poly(meth)acrylatplatten bevorzugt.

Des weiteren kann das erfindungsgemäße die erfindungsgemäße Poly(meth)acrylatplatte übliche Additive aufweisen. Hierzu gehören unter anderem Antistatika, Antioxidantien, Entformungsmittel, Flammschutzmittel, Schmiermittel, Farbstoffe, Fließverbesserungsmittel, Füllstoffe, Lichtstabilisatoren und organische Phosphorverbindungen, wie Phosphite oder Phosphonate, Pigmente, Thixotropiermittel, UV-Schutzmittel, Verwitterrungsschutzmittel und Weichmacher.

Füllstoffe sind generell Zusätze in fester Form, die sich hinsichtlich ihrer Zusammensetzung und Struktur wesentlich von der Poly(meth)acrylat-Matrix unterscheiden. Es kann sich hierbei sowohl um anorganische als auch um organische Materialien handeln. Sie sind in der Fachwelt weithin bekannt.

Vorzugsweise werden unter den Bedingungen der Depolymerisation der Poly(meth)acrylate inerte Füllstoffe eingesetzt. Hierbei werden in Bezug auf die Erfindung unter Füllstoffen, die unter den Bedingungen der Depolymerisation der Poly(meth)acrylate inert sind, solche Substanzen verstanden, die die Depolymerisation von (Meth)acrylatpolymeren nicht wesentlich nachteilig beeinflussen oder gar unmöglich machen. Diese Eigenschaft der Füllstoffe ermöglicht ein einfaches Recycling der (Poly(meth)acrylatplatten.

Poly(meth)acrylate, vor allem PMMA, zählen zu den wenigen Kunststoffen, die hervorragend für das direkte chemische Recycling geeignet sind. Hierunter ist zu verstehen, daß diese Polymere sich bei bestimmten Temperaturen und Drucken wieder vollständig in die entsprechenden Monomerbausteine zerlegen lassen (Depolymerisation), wenn auf geeignete Weise Wärme zugeführt wird. So werden beispielsweise zur Depolymerisation von Polymethylmethacrylat (PMMA) und Rückgewinnung des dabei anfallenden monomeren Methylmethacrylats (MMA) durch thermische Behandlung von Acrylglas-Abfällen bei Temperaturen > 200 °C, Kondensation der entstehenden Monomer-Brüden und Aufarbeitung der rohen Monomeren in der Literatur und in den Patentschriften verschiedene kontinuierliche und diskontinuierliche Verfahrensweisen beschrieben. Bei dem industriell am häufigsten angewandten Verfahren wird das Polymermaterial in einen teilweise mit Blei gefüllten Kessel gegeben, der von außen beheizt wird. Bei Temperaturen von über 400 °C depolymerisiert das Polymermaterial und die entstehenden Monomerdämpfe gelangen über eine Rohrleitung in einen Kondensator, wo sie zu einem rohen, flüssigen Monomer kondensiert werden. Entsprechende Depolymerisationsverfahren sind beispielsweise aus der DE-OS 21 32 716 bekannt.

Die erfindungsgemäßen Platten sind beispielsweise durch Polymerisation eines (Meth)acrylat-Systems in einem Gießverfahren, vorzugsweise nach dem Kammerverfahren, Rosteroprozess oder anderen Abarten und Modifikationen des Kammerverfahrens, erhältlich, wobei das polymerisierbare System die hierin vorstehend angegebenen Komponenten A) bis F) umfaßt.

Die Komponente A) ist essentieller Bestandteil des zu polymerisierenden (Meth)acrylat-Systems.

Ein in Klammem gesetzter Bestandteil steht für dessen optionale Verwendbarkeit, d. h. (Meth)acrylat steht für Acrylat und/oder Methacrylat.

Die Monomerkomponente A) enthält zumindest 50 Gew.-% (Meth)acrylat, wobei einwertige (Meth)acrylate mit einem C₁-C₄-Esterrest bevorzugt sind. Längerkettige Ester, d. h. solche mit einem C₅- oder längerkettigem Esterrest sind auf 50 Gew.% in der Komponente A) beschränkt. Bevorzugt Enthält die Komponente A) zumindest 40 Gewichtsprozent Methylmethacrylat.

Die langkettigen (Meth)acrylate machen in der angegebenen Menge das System schlagzäher. Damit machen diese Ester die Platte zwar flexibler, aber auch weicher, wodurch die Gebrauchseigenschaften bei Mengen über 50 Gew.-% eingeschränkt würden.

Neben den (Meth)acrylaten kann die Komponente A) auch andere Comonomere enthalten, wobei deren Anteil auf 50 Gew.-% beschränkt ist. Unter diesen Comonomeren können Vinylaromaten und/oder Vinylester zu jeweils bis zu 50 Gew.-% in der Komponente A) enthalten sein. Höhere Anteile an Vinylaromaten lassen sich schwer einpolymerisieren und können zu einer Entmischung des Systems führen. Höhere Anteile an Vinylester können weiterhin bei tiefen Temperaturen nur ungenügend durchhärten und neigen zu einem größeren Schrumpfverhalten.

Vorzugsweise ist die Komponente A) zu 80 - 100 Gew.-% und besonders bevorzugt zu 90 - 100 Gew.-% aus (Meth)acrylaten aufgebaut, da sich mit diesen Monomeren Platten mit günstigen Verarbeitungs- und Gebrauchseigenschaften erreichen lassen. Der Anteil an C₂-C₄-Estern in (Meth)acrylaten ist vorzugsweise auf 50 Gew.-% in der Komponente A) beschränkt, bevorzugt sind diese Ester zu max. 30 Gew.% und besonders vorteilhaft zu max. 20 Gew.% in der Komponente A) enthalten. Hierdurch lassen sich besonders flexible Platten aufbauen.

Geeignete monofunktionelle (Meth)acrylate sind insbesondere Methylmethacrylat, Butylmethacrylat, Butylacrylat, 2-Ethylhexylacrylat, Ethyltriglykolmethacrylat, Hydroxypropylmethacrylat.

Als Comonomere eignen sich insbesondere Vinyltoluol, Styrol, Vinylester.

Vorzugsweise ist Styrol auf max. 20 Gew.% in A) beschränkt, da ein höherer Gehalt zu Störungen bei der Polymerisation führen kann.

Essentiell sind in der Komponente A) auch mehrwertige (Meth)acrylate enthalten. Die mehrwertigen (Meth)acrylate tragen durch ihre vernetzende Wirkung bei der Polymerisation unter anderem zur Verminderung der Wasseraufnahme der Platte bei. Vorzugsweise sind mehrwertige (Meth)acrylate im (Meth)acryfatsystem in der Komponente A) in einer Menge von 0,1 - 30 Gew.-%, besonders zweckmäßig in einer Menge von 0,2 - 5 Gew.%, enthalten. Die polyfunktionellen (mehrwertigen) (Meth)acrylate dienen zur Polymerverknüpfung zwischen linearen Molekülen. Dadurch können Eigenschaften wie Flexibilität, Kratzfestigkeit, Glasumwandlungstemperatur, Schmelzpunkt oder Härtungsabläufe beeinflusst werden.

Zu vorzugsweise einsetzbaren mehrfachfunktionellen (Meth)acrylaten gehören unter anderem:
(1) Difunktionelle (Meth)acrylate
   Verbindungen der allgemeinen Formel: 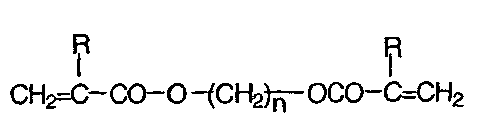 worin R Wasserstoff oder Methyl ist und n eine positive ganze Zahl zwischen 3 und 20, wie z. B. Di(meth)acrylat des Propandiols, Butandiols, Hexandiols, Octandiols, Nonandiols, Decandiols und Eicosandiols, Verbindungen der allgemeinen Formel: 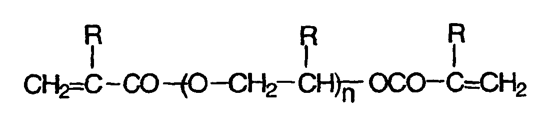 worin R Wasserstoff oder Methyl ist und n eine positive ganze Zahl zwischen 1 und 14, wie z. B. Di(meth)acrylat des Ethylenglycols, Diethylenglycols, Triethylenglycols, Tetraethylenglycols, Dodecaethylenglycols, Tetradecaethylenglycols, Propylenglycols, Dipropylenglycols und Tetradecapropylenglycols; und Glycerindi(meth)acrylat, 2,2'-Bis[p-(γ-methacrytoxy-β-hydroxypropoxy)-phenylpropan] oder Bis-GMA, Biphenol-A-dimethacrylat, Neopentylglycoldi(meth)acrylat, 2,2'-Di(4-methacryloxypolyethoxyphenyl)propan mit 2 bis 10 Ethoxygruppen pro Molekül und 1,2-Bis(3-methacryloxy-2-hydroxypropoxy)butan.
(2) Tri- oder mehrfachfunktionelle (Meth)acrylate
   Trimethylolpropantri(meth)acrylate und Pentaerythritoltetra(meth)acrylat.

Bevorzugte übliche polyfunktionelle (Meth)acrylate umfaßen neben anderen Triethylenglykoldimethacrylat (TEDMA), Trimethylolpropantrimethacrylat (TRIM), 1,4-Butandioldimethacryiat (1,4-BDMA), Ethylenglykoldimethacrylat (EDMA).

Weitere bevorzugte Komponenten eines erfindungsgemäß einzusetzenden (Meth)acrylatsystems sind mehrwertige (mindestens zweifachfunktionelle) Urethan(meth)acrylate.

Die Komponente B) ist eine optionale Komponente, die jedoch sehr bevorzugt eingesetzt wird.

Grundsätzlich kann man bei der Bereitstellung von B) auf zwei voneinander verschiedene Weisen vorgehen. Zum einen kann man B) als polymere Substanz mit A) mischen. Zum anderen kann man A) vorpolymersieren, wobei man einen sogenannten Sirup erhält. Dieser Sirup weist dann bereits monomere Bestandteile aus der Gruppe A) und polymere Betsandteile aus der Gruppe B) in Mischung miteinander auf.

Zur Einstellung der Viskosität des Harzes und der gesamten Rheologie des Systems sowie der besseren Durchhärtung kann - wie ausgeführt - der Komponente A) ein Polymer oder Prepolymer B) zugegeben werden. Dieses (Pre)polymer soll in A) löslich oder quellbar sein. Auf einen Teil A) werden 0 bis 12 Teile des Prepolymers B) eingesetzt. Geeignet sind insbesondere Poly(meth)acrylate, wobei diese als festes Polymerisat in A) gelöst oder als sogenannte Sirupe, d. h. teilweise polymerisierte Mischungen entsprechender Monomere, eingesetzt werden können. Weiterhin sind Polyvinylchlorid, Polyvinylacetat, Polystyrol, Epoxydharze, Epoxy(meth)acrylate, ungesättigte Polyester, Polyurethane oder Mischungen hiervon geeignet. Diese Polymere bewirken z. B. spezielle Flexibilitätseigenschaften, Schrumpfregulierung, wirken als Stabilisator oder Vertaufsverbesserer.

Bevorzugt werden 2 bis 11 Teile B) auf 1 Teil A) eingesetzt. Besonders zweckmäßig sind 4 bis 10 Teile B) auf 1 Teil A). Ganz besonders bevorzugt nimmt man 6 bis 9 Teile eines (Pre)polymers und mischt sie mit einem Teil polymerisierbaren Monomeren A). Vorzugsweise wird das (Pre)polymer B) in A) gelöst.

In bevorzugter Ausführungsform ist das Gewichtsverhältnis der Komponenten B) und A) des Bindemittels im Bereich von 1 : 1 bis 12 : 1. In diesem Bereich lässt sich eine optimale Abstimmung der Eigenschaften erreichen.

Besonders zweckmäßig sind Gewichtsverhältnisse B) : A) im Bereich von 5 : 1 bis 12 : 1.

Die Komponente B) ((Pre)polymer) kann ein beliebiges Polymerisat sein. Besonders zweckmäßig handelt es sich um ein Vorpolymerisat, es kann sich aber auch um ein Suspensionspolymerisat, Emulsionspolymerisat und/oder Mahlgranulat aus Recyclingprozessen handeln. Im einfachsten Fall wird ein Vorpolymerisat des MMA mit 8 bis 10 % (bezogen auf Mol) Monomerumsatz verwendet.

Beim (Pre)polymer B) kann es sich um ein Copolymer handeln, wobei sich dann Härte und Flexibilität der Platten durch Art und Menge des Comonomeren im (Pre)polymer B) beeinflussen lassen. Zu einsetzbaren Comonomeren, welche am Aufbau des jeweiligen (Pre)polymeren B) beteiligt sind, gehören u. a. Acrylate und Methacrylate, die von Methylmethacrylat (MMA) verschieden sind, Vinylester, Vinylchlorid, Vinylidenchlorid, Styrol, α-Methylstyrol und die verschiedenen halogensubstituierten Styrole, Vinyl-und Isopropenylether, Diene, wie beispielsweise 1,3-Butadien und Divinylbenzol.

Bevorzugte Comonomere sind für Methylacrylat u. a., Ethylacrylat, Butylacrylat, 2-Ethylhexylacrylat, Ethylmethacrylat, n-Butylmethacrylat, i-Butylmethacrylat, 2-Ethylhexylmethacrylat, Propylacrylat, Propylmethacrylat, Methacrylsäure, Ethyltriglykolmethacrylat, Hydroxypropylmethacrylat.

Die Komponente C) ist eine essentielle Komponente, die zur Härtung (Polymerisation) des polymerisierbaren Systems unerlässlich ist.

Die Polymerisation kann radikalisch sowie ionisch erfolgen, wobei die radikalische Polymerisation bevorzugt ist. Sie kann thermisch, durch Strahlen und durch Initiatoren erfolgen, wobei vorzugsweise Initiatoren verwendet werden, die Radikale bilden. Die jeweiligen Bedingungen der Polymerisation hängen von den gewählten Monomeren und dem Initiatorsystem ab und sind in der Fachwelt weithin bekannt.

Zu den bevorzugten Initiatoren gehören unter anderem die in der Fachwelt weithin bekannten Azoinitiatoren, wie AIBN bzw. 1,1-Azobiscyclohexancarbonitril, sowie Peroxyverbindungen, wie Methylethylketonperoxid, Acetylacetonperoxid, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, 1,1-Bis(tert.-butylperoxy)cyclohexan, 1,1-Bis (tert.-butylperoxy)3,3,5-trimethylcyclohexan, Cumylhydroperoxid, tert.-Butylhydroperoxid, Dicumylperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Es kommen ebenfalls Redoxsysteme in Frage, wobei auch phlegmatisierte Systeme in organischen Lösungsmitteln oder in wässrigen Lösungen oder in wässriger Suspension bekannt und einsetzbar sind. Ein solches System ist unter der Marke ®Cadox von der Firma Akzo erhältlich.

Auch Mischungen mehrerer Initiatoren mit abgestufter Halbwertszeit sind möglich. Auf diese Weise lässt sich die Polymerisationsreaktion besser beherrschen, örtliche Unregelmäßigkeiten lassen sich vermeiden und es wird ein gleichmäßigeres Ergebnis erhalten. Auch kann man dadurch die Nachpolymerisationszeit (Tempern der Platte in Thermoschränken) verkürzen.

Die Menge der Komponente C) ist in weiten Grenzen variabel. Sie richtet sich nach der Zusammensetzung der Monomeren, der Art und Menge des (Pre)polymeren sowie der gewünschten Polymerisationstemperatur und dem angestrebten Molekulargewicht des herzustellenden Polymers. Richtwerte ergeben sich etwa für Molekulargewichte von 100.000 bis 1.000.000 g/mol (Gewichtsmittel des Molekulargewichts) zu 1x10⁻⁵ bis etwa 1x10⁻⁶ Mot Initator pro Mol polymerisierbaren Bestandteilen des Monomersystems. Bevorzugt liegt das Molekulargewicht des Polymers zwischen 650.000 und 800.000 g/mol.

Bei der Komponenten D) handelt es sich um einen optionalen Bestandteil des polymerisierbaren (Meth)acrylat-Systems, der allerdings bevorzugt im System enthalten ist. Beispiele sind Emulgatoren. Bevorzugt sind Lecithine. Die Menge der einzusetzenden Substanzen kann über weite Bereiche variiert werden. Bevorzugt sind 0,01 bis 1 Gewichtsteil D) auf 1 Gewichtsteil A). Besonders zweckmäßig sind 0,1 bis 0,2 Gewichtsteil D) auf 1 Gewichtsteil A).

Die Komponente E) ist optional. Es handelt sich hierbei um die üblichen Zusatzstoffe, die an sich bekannt sind, wobei beispielhafte Additive zuvor aufgeführt wurden. Zu E) sind vor allem auch solche Füllstoffe zu zählen, die nicht unter F) fallen. Hierzu gehören also nicht verstärkend wirkende Füllstoffe wie Farbpigmente und dergleichen, die vor allem bevorzugt von kleinerer Partikelgröße als die Füllstoffe der Komponente F) sind. Die mittlere Partikelgröße der gemäß E) eingesetzten Füllstoffe liegt vorzugsweise im Bereich von kleiner als 10 µm, zweckmäßig im Bereich von kleiner als 5 µm, besonders bevorzugt kleiner als 1 µm und ganz besonders bevorzugt kleiner als 0,01 µm. Das Verhältnis der mittleren Partikelgrößen der Füllstoffe E) zu F) ist zweckmäßig im Bereich von 1 : 3 bis 1 : 1000, vorzugsweise im Bereich von 1 : 5 bis 1 : 100 und besonders bevorzugt im Bereich von 1 : 10 bis 1 : 50.

Die Komponente F) ist essentiell. Darüber hinaus wurde diese Komponente zuvor ausführlich beschrieben.

### Beispiele

### 1. Herstellung einer beispielhaften Platte (Beispiel 1) nach dem Umluftofenverfahren

### 1.1. Formenbau

Zwei Sekuritglasplatten werden als Form verwendet. Zwischen den Formglasplatten wird eine Dichtschnur aus PVC gelegt. In die so gebildete Kammer werden im Abstand von jeweils 30 mm parallel zueinander monofile Polyamidfäden mit einem Durchmesser von 2 mm eingespannt. Die Glasplatten werden anschließend mit Hilfe von Klammern an drei Seiten fixiert. Die Breite der Kammer lässt sich durch verschiedene Dicken der Dichtungsschnur variieren. Im Beispielfall betrug die lichte Dicke der Kammer etwa 15 mm. Die vierte Seite wird nach erfolgter Befüllung verschlossen. Das so verschlossene Plattensystem wird waagrecht gelagert und in einem Umluftofen platziert.

### 1.2. Poly(meth)acrylatsystem für die Befüllung der Form

| Nr. | Gewichtsteile | Substanz | Gruppe | Gewichts- % oder Teile (T.) |
|---|---|---|---|---|
| 1) | 49,2390 | Vorpolymerisat ^{1*} entspricht etwa 44,32 T. A) und 4,92 T. B) | A) B) | 99,989 % A) 0,1 T. B) auf 1 T. A) |
| 2) | 0,005 | Methacrylsäure | A) | 0,0001 % A) |
| 3) | 0,055 | Vernetzer ^{2*} | A) | 0,001 % A) |
| 4) | 0,001 | AVN ^{3*} | C) | |
| 5) | 0,6 | SER AD FA 192^{4*} | D) | |
| 6) | 0,1 | ®Tinuvin P ^{5*} | E) | |
| 7) | 50,00 | SE-Super ^{6*} | F) | 1 T. F) auf 1 T.∑ A)-E) |

| | | | | |
|---|---|---|---|---|
| 1* Vorpolymerisat ist ein auf MMA beruhender Sirup, worin Methylmethacrylat in bekannter Weise bis zu einem Umsatz von etwa 10 % (90 Gewichts % Restmonomer) vorpolymerisert wurde. Die Viskosität des Vorpolymerisats betrug etwa 450 cp. | | | | |
| 2* Vernetzer steht für Triethylenglykoldimethacrylat (TEDMA). | | | | |
| 3* AVN steht für den Radikalbildner Azovaleronitril. | | | | |
| 4* SER AD FA 192 bezeichnet einen Phosphorsäureester aus der Gruppe der ethoxylierten Nonylphenolphosphate. | | | | |
| 5* ®Tinuvin P ist Lichtstabilisator der Firma Ciba - Spezialitätenchemie GmbH und ist ein 2-(2-Hydroxyphenyl)benzotriazol. | | | | |
| 6* SE-Super der Firma Naintsch, A-8045 Graz-Andritz, Austria. Es handelt sich um eine Verwachsung von weißem Talk mit reinem Dolomit und diese besteht gemäß chemischer Analyse aus 17 % SiO₂, 22 % MgO, 24 % CaO und weist einen Glühverlust bei 1 h und 1050 °C von 37 % auf. Der Dolomitgehalt (Leco) beträgt 75 %. Bei einer Siebanalyse nach DIN 66165 ist der Rückstand 2,0 % auf 12 µm. | | | | |

### 1.3. Ansatzfertigung

Die benötigten Füll- und Zusatzstoffe werden in ca. ein Drittel des benötigten Vorpolymerisats (Sirup) eindispergiert. Hierbei wird zuerst ein Dispergierhilfsmittel und anschließend die benötigten Zusatzstoffe wie z.B. UV-Stabilisator, Vemetzer, Thermostabilisatoren, etc., sowie der Füllstoff zudosiert.

Diese Lösung wird in einem kühl- und evakuierbaren Rührbehälter mind. 30 min. dispergiert. Die Dispergiertemperatur sollte dabei 50 °C nicht überschreiten. Nach erfolgter Dispergierung wird der Ansatz auf Raumtemperatur abgekühlt, mit der restlichen Sirupmenge verdünnt und anschließend der benötigte Katalysator in Lösungsform zugegeben. Diese Lösung wird anschließend noch 30 min unter Vakuum gerührt.

### 1.4. Befüllung und Polymerisation in der Kammer sowie Entformung

Der beschriebene Ansatz wird in die Form gegossen; die Befüllung erfolgt direkt vom Ansatzkessel aus über einen 25 µm Sackfilter in die Form. Die Platten werden im Umluftverfahren polymersiert. Bei der Hauptpolymerisation werden ca. 90 % Umsatz erreicht. Die Nachpolymerisation der Platten erfolgt in einem Temeperofen bei 120 °C. Nach Abkühlen der Platten wird die obere Glasplatte der Kammer entfernt und die Poly(meth)acrylat-Platte entnommen.

### 2 bis 4

Gemäß Beispiel 1 wurden weitere Platten gefertigt. Insbesondere wurde in den Beispielen 2 bis 4 die Rezeptur des Poly(meth)acrylatsystems variiert. Die eingesetzten Systeme wiesen folgende Zusammensetzung auf:

| Zusammensetzung der (Meth)acrylatsysteme 2 bis 4 für, jeweils in Gewichtsteilen: | | | |
|---|---|---|---|
| Substanz | Bsp. 2 | Bsp. 3 | Bsp. 4 |
| Vorpolymerisat | 34,1185 | 32,115 | 28,115 |
| Methylmethacrylat | 5 | 7 | 6 |
| MAS | 0,005 | 0,005 | 0,005 |
| Vernetzer (TEDMA) | 0,055 | 0,06 | 0,06 |
| AVN | 0,0015 | 0,02 | 0,02 |
| SER AD FA 192 | 0,72 | 0,70 | 0,70 |
| ®Tinuvin P | 0,10 | 0,10 | 0,10 |
| Plastorit Super ^{6*} | 60 | 30 | 25 |
| Martinal ON 310 ^{7*} | - | 30 | 45 |

| | | | |
|---|---|---|---|
| 7* Martinal ON 310 ist eine Aluminiumhydroxid-Type der Martinswerke GmbH. Es weist eine Mittelkomgröße von 9-13 µm auf. Die Ölaufnahme beträgt zwischen 24 - 28 cm³/100 g. Der Feuchtegehalt beträgt <0,3 % | | | |

An den 15 mm dicken, 2x2 m großen NT-LS-Platten der Erfindung wurden verschiedene Untersuchungen durchgeführt. Teilweise wurden bestimmte physikalische Eigenschaften gerechnet und mit den berechneten Eigenschaften von transparenten Platten von identischen Abmessungen verglichen.

Im Ergebnis entsprachen die Platten gemäß der Erfindung allen einschlägigen Normen. Im Vergleich zu transparentem Lärmschutzmaterial mit eingebetteten Nylonfäden, so genanntem LS CC Material wiesen die erfindungsgemäßen Platten deutlich verbesserte mechanische Eigenschaften auf. Mit einer Dicke von 35 mm LS NT konnte eine dreiseitige Einspannung mit einem Pfostenabstand von 5 x 2 m realisiert werden. Dies ist mit einem LS CC Material von 35 mm Dicke nicht möglich, da Durchbiegung und Spannung unter Last außerhalb der Toleranzen liegen. Bei vierseitiger Einspannung lässt sich ein Pfostenabstand von 5 x 2 m mit dem erfindungsgemäßen Material LS NT bereits in einer Stärke von nur 12 mm normgerecht ausführen.

Die erfindungsgemäße Platte gemäß Beispiel Nr. 4 wurde einer Prüfung auf Schwerentflammbarkeit gemäß DIN 4102 - B1 unterzogen. Dabei wurden die Anforderungen einer Prüfung auf Schwerentflammbarkeit gemäß DIN 4102-B1 vollständig erfüllt. Hieraus folgt, dass die erfindungsgemäßen hochgefüllten NT-LS-Platten schwer entflammbar sind.

Eine erfindungsgemäße Platte gemäß Beispiel 4 wurde ebenfalls einem Bruchtest unterzogen. Hierbei wurde das o. g. Lärmschutzelement auf vier Holzböcke (Höhe ca. 860 mm) aufgelegt, nicht aufgespannt oder gesichert. Zum Schutz des Bodens wurde auf denselben eine 1200 x 1200 x 140 (L x B x H) große Holzpalette gelegt.

Aus einer Höhe von 1500 mm über dem Lärmschutzelement wurde ein 400 kg schweres zylinderförmiges Metallgewicht auf die Elementmitte fallen lassen. Die kinetische Energie des Gewichts war 5.89 J beim Auftreffen bei einer Geschwindigkeit von 5.42 m/s (19,5 km/h). Der Auftreffpunkt des Metallgewichtes wurde mit einem Radius versehen. Beim Auftreffen des Metallgewichtes splitterte das Acrylglas in seiner typischen Form. Es entstanden jedoch keine freien Splitter, vielmehr wurden alle Acrylglasbruchteile durch die eingebetteten Fäden gehalten.

Dieses Ergebnis ist für ein hochgefülltes System als überaus überraschen einzustufen.

## Patentansprüche

1. Acrylglasplatte für den Einsatz als nicht transparentes Lärmschutzelement in Lärmschutzwänden, wobei die Platte eine Größe von 2 x 2 m oder größer bei einer Dicke von mehr als 8 mm, vorzugsweise mehr als 12 mm, aufweist und in das Acrylglas zur Splitterbindung im Falle eines Bruches der Platte Fäden, Bänder, Gitter oder Netze aus einem mit dem Acrylglas unverträglichen Material eingebettet sind, **gekennzeichnet durch** einen auf das Gesamtgewicht der Platte vermindert um das Gewicht der eingebetteten Fäden, Bänder, Gitter oder Netze bezogenen Anteil an Füllstoffen im Bereich von 40 bis 80 Gewichtsprozent.

2. Acrylglasplatte nach Anspruch 1, **gekennzeichnet durch** eine Dicke im Bereich von mehr als 8 mm bis 40 mm, vorzugsweise im Bereich von größer 10 bis 35 mm.

3. Acrylglasplatte gemäß Anspruch 1 oder 2, **gekennzeichnet durch** eine Dicke im Bereich von 12 bis 35 mm.

4. Acrylglasplatte gemäß einem oder mehreren der vorhergehenden Ansprüche 1 bis 3, **gekennzeichnet durch** einen auf das Gesamtgewicht der Platte bezogenen Anteil an Füllstoffen im Bereich von 50 bis 60 Gewichtsprozent.

5. Acrylglasplatte gemäß einem oder mehreren der vorhergehenden Ansprüche, **gekennzeichnet durch** eine im Wesentlichen homogene Verteilung der Füllstoffe in der Platte.

6. Acrylglasplatte gemäß einem oder mehreren der vorhergehenden Ansprüche, durch **gekennzeichnet**, dass der Füllstoff Talk, Dolomit, natürliche Verwachsungen von Talk und Dolomit, Glimmer, Quarz, Chlorit, Aluminiumoxid, Aluminiumhydroxid, Tone, Siliciumdioxid, Silikate, Carbonate, Phosphate, Sulfate, Sulfide, Metalloxide, Glasmehl, Glaskugeln, Keramik, Kaolin, Porzellan, Cristobalit, Feldspalt und/oder Kreide umfasst.

7. Acrylglasplatte gemäß einem oder mehreren der vorhergehenden Ansprüche, **dadurch gekennzeichnet, dass** die eingesetzten Füllstoffpartikel Schichtfüllstoffe sind.

8. Acrylglasplatte gemäß einem oder mehreren der vorhergehenden Ansprüche, **dadurch gekennzeichnet, dass** die mittlere Partikelgröße des eingesetzten Füllstoffs im Bereich von 0,01 bis 80 µm, insbesondere im Bereich von 0,05 bis 30 µm, ganz besonders zweckmäßig im Bereich von 0,1 bis 20 µm, liegt.

9. Acrylglasplatte gemäß einem oder mehreren der vorhergehenden Ansprüche, **dadurch gekennzeichnet, dass** der Füllstoff eine Verwachsung aus Talk und Dolomit, gegebenenfalls in Mischung mit Aluminiumhydroxid, ist.

10. Acrylglasplatte gemäß einem oder mehreren der vorhergehenden Ansprüche, erhältlich durch Polymerisation eines (Meth)acrylat-Systems in einem Gießverfahren vorzugsweise nach dem Kammerverfahren oder einer Abart davon, wobei das polymerisierbare System:
A)
| | |
|---|---|
| a) (Meth)acrylat | 50 - 100 Gew.-% |
| a1) Methyl(meth)acrylat | 0 - 99,99 Gew.-% |
| a2) C₂-C₄ (Meth)acrylat | 0 - 99,99 Gew.% |
| a3) ≥ C₅ (Meth)acrylat | 0 - 50 Gew.-% |
| a4) mehrwertige (Meth)acrylate | 0,01 - 50 Gew.-% |
| b) Comonomere | 0 - 50 Gew.-% |
| b1) Vinylaromaten | 0 - 50 Gew.-% |
| b2) Vinylester | 0 - 50 Gew.-%, |
wobei die Komponenten a) und b) so gewählt sind, daß sie zusammen 100 Gewichtsprozent der polymerisierbaren Komponente A) ergeben,
B) auf 1 Gew.-Teil A) 0 -12 Gew.-Teile eines in A) löslichen oder quellbaren (Pre)polymers,
C) Initiator in einer Menge ausreichend zur Härtung der Komponente A),
D) gegebenenfalls Mittel zur Einstellung der Viskosität des Systems,
E) übliche Additive in einer Menge bis zu 3 Gew.-teile auf 1 Gewichtsteil A)
und
F) 0,33 bis 4 Gew.-Teile Füllstoffe auf 1 Gew.-Teil Bindemittel (Summe aus A) bis E))
enthält
und die Viskosität des (Meth)acrylat-Systems vor der Polymerisation größer als 0,1 Pa•s (größer 100 cP) ist.

11. Acrylglasplatte gemäß einem oder mehreren der vorhergehenden Ansprüche 1 bis 10, **dadurch gekennzeichnet, dass** sie zur Splitterbindung im Bruchfall in die hochgefüllte Kunststoffmatrix eingebettete Stahlfäden aufweist, die gegebenenfalls Kunststoff ummantelt, vorzugsweise mit Kunststoff aus Polyamid ummantelt, sind.

12. Verfahren zur Herstellung einer Acrylglasplatte gemäß einem oder mehreren der Ansprüche 1 bis 12, bei welchem man
a) eine polymerisierbare, gefüllte (Meth)acrylat-Zusammensetzung bereitstellt,
b) die bereitgestellte Zusammensetzung in eine vorbereitete Form gießt, in welcher die zur Einbettung vorgesehenen Fäden, Bänder, Gitter oder Netze positioniert sind,
c) die Zusammensetzung in der Form bei einer Temperatur oberhalb Raumtemperatur unter Erhalt einer Platte polymerisiert und
d) die Platte entformt,
**dadurch gekennzeichnet,**
**dass** man die Viskosität der polymerisierbaren, hochgefüllten (Meth)acrylat-Zusammensetzung vor der Polymerisation in der Form auf einen Wert von größer als 0,1 Pa·s einstellt.

13. Verfahren gemäß Anspruch 13,
**dadurch gekennzeichnet,**
**dass** man die Viskosität der Zusammensetzung durch Variation des Gewichtsverhältnisses von (Pre)polymer zu polymersierbaren Monomeren in der Zusammensetzung reguliert.

14. Verfahren gemäß Anspruch 13 oder 14,
**dadurch gekennzeichnet,**
**daß** man die Viskosität der Zusammensetzung durch Variation des Anteils an viskositätseinstellenden Mitteln reguliert.

15. Verwendung einer Acrylglasplatte gemäß den vorhergehenden Ansprüchen 1 bis 12 als nicht transparentes Lärmschutzelement in Lärmschutzwänden.

## Claims

1. Sheets of acrylic glass for use as a non-transparent soundproofing element in soundproofing walls, the sheet being 2 x 2 m or more in size, with a thickness of more than 8 mm, preferably more than 12 mm, and filaments, strips, lattice or mesh of a material incompatible with the acrylic glass is or are embedded in the acrylic glass in order to bind the splinters in the event of breakage, **characterised by** a proportion of fillers in the range from 40 to 80 wt.%, based on the total weight of the sheet, minus the weight of the embedded filaments, strips, lattice or mesh.

2. Sheet of acrylic glass according to claim 1, **characterised by** a thickness in the range from more than 8 mm to 40 mm, preferably in the range from more than 10 to 35 mm.

3. Sheet of acrylic glass according to claim 1 or 2, **characterised by** a thickness in the range from 12 to 35 mm.

4. Sheet of acrylic glass according to one or more of the preceding claims 1 to 3, **characterised by** a proportion of fillers in the range from 50 to 60 wt.%, based on the total weight of the sheet.

5. Acrylic glass sheet according to one or more of the preceding claims, **characterised by** a substantially homogeneous distribution of fillers in the sheet.

6. Sheet of acrylic glass according to one or more of the preceding claims, **characterised in that** the filler comprises talc, dolomite, natural intergrowths of talc and dolomite, mica, quartz, chlorite, aluminium oxide, aluminium hydroxide, clays, silicon dioxide, silicates, carbonates, phosphates, sulphates, sulphides, metal oxides, powdered glass, glass beads, ceramics, kaolin, porcelain, cristobalite, feldspar and/or chalk.

7. Sheet of acrylic glass according to one or more of the preceding claims, **characterised in that** the filler particles used are laminar fillers.

8. Sheet or acrylic glass according to one or more of the preceding claims, **characterised in that** the average particle size of the filler used is in the range from 0.01 to 80 µm, particularly in the range from 0.05 to 30 µm, more particularly in the range from 0.1 to 20 µm.

9. Sheet of acrylic glass according to one or more of the preceding claims, **characterised in that** the filler is an intergrowth of talc and dolomite, optionally mixed with aluminium hydroxide.

10. Sheet of acrylic glass according to one or more of the preceding claims, obtainable by polymerisation of a (meth)acrylate system in a casting process, preferably by the chamber method, or a modification thereof, wherein the polymerisable system contains:
A)
| | |
|---|---|
| a) (Meth) acrylate | 50-100 wt.% |
| a1) Methyl(meth)acrylate | 0-99.99 wt.% |
| a2) C₂-C₄ (Meth)acrylate | 0-99.99 wt.% |
| a3) ≥C₅ (Meth)acrylate | 0-50 wt.% |
| a4) Polyvalent (Meth)acrylates | 0.01-50 wt.% |
| b) Comonomers | 0-50 wt.% |
| b1) Vinyl aromatics | 0-50 wt.% |
| b2) Vinyl esters | 0-50 wt.%, |
components a) and b) being selected so that together they make up 100 wt.% of the polymerisable component A),
B) To 1 part by weight of A), 0-12 parts by weight of a (pre)polymer which is soluble or swellable in A),
C) Initiator in an amount sufficient to cure Component A),
D) Optionally means for adjusting the viscosity of the system,
E) Conventional additives in an amount of up to 3 parts by weight to 1 part by weight of A)
and
F) 0.33 to 4 parts by weight of fillers to 1 part by weight of binder (Total of A) to E)),
and the viscosity of the (meth)acrylate system before polymerisation is greater than 0.1 Pa.s (greater than 100 cP).

11. Sheet of acrylic glass according to one or more of the preceding claims 1 to 10, **characterised in that**, for binding splinters in the event of a breakage, it comprises steel filaments embedded in the highly filled plastics matrix, said filaments optionally being plastic-coated, preferably coated with plastics obtained from polyamide.

12. Method of producing a sheet or acrylic glass according to one or more of claims 1 to 12, wherein
a) a polymerisable filled (meth)acrylate composition is prepared,
b) the prepared composition is poured into a prepared mould in which the filaments, strips, lattice or mesh intended for embedding are positioned,
c) the composition is polymerised in the mould at a temperature above room temperature to obtain a sheet and
d) the sheet is removed from the mould,
**characterised in that** the viscosity of the polymerisable, highly filled (meth)acrylate composition is adjusted before polymerisation in the mould to a value in excess of 0.1 Pa.s.

13. Method according to claim 13, **characterised in that** the viscosity of the composition is regulated by varying the ratio by weight of (pre)polymer to polymerisable monomers in the composition.

14. Process according to claims 13 or 14, **characterised in that** the viscosity of the composition is regulated, by varying the proportion of viscosity-adjusting agents.

15. Use of a sheet or acrylic glass according to the preceding claims 1 to 12 as a non-transparent soundproofing element in soundproofing walls.

## Revendications

1. Plaque en verre acrylique pour l'utilisation en tant qu'élément insonorisant non transparent dans des parois d'insonorisation, la plaque ayant une dimension de 2 x 2 m ou plus pour une épaisseur de plus de 8 mm, de préférence plus de 12 mm, et des fils, des bandes, des grillages ou des treillis en un matériau incompatible avec le verre acrylique étant intégrés dans le verre acrylique pour la liaison des éclats en le cas de rupture de la plaque,
**caractérisée par**
une proportion de matière de charge dans la gamme de 40 % à 80 % pour en poids rapportée au poids total de la plaque, réduite du poids des fils, des bandes, des grillages ou des treillis intégrés.

2. Plaque en verre acrylique selon la revendication 1,
**caractérisée par**
une épaisseur supérieure à 8 mm et jusqu'à 40 mm, de préférence supérieure à 10 mm et jusqu'à 35 mm.

3. Plaque en verre acrylique selon la revendication 1 ou 2,
**caractérisée par**
une épaisseur comprise entre 12 mm et 35 mm.

4. Plaque en verre acrylique selon une ou plusieurs des revendications 1 à 3,
**caractérisée par**
une proportion de matière de charge dans la gamme de 50 % à 60 % en poids rapportée au poids total de la plaque.

5. Plaque en verre acrylique selon une ou plusieurs des revendications précédentes,
**caractérisée par**
une répartition sensiblement homogène des matières de charge dans la plaque.

6. Plaque en verre acrylique selon une ou plusieurs des revendications précédentes,
**caractérisée en ce que**
la matière de charge comprend le talc, la dolomite, les associations naturelles de talc et de dolomite, le mica, le quartz, le chlorite, l'oxyde d'aluminium, l'hydroxyde d'aluminium, les argiles, le dioxyde de silicium, les silicates, les carbonates, les phosphates, les sulfates, les sulfures, les oxydes métalliques, le verre pulvérisé, les billes de verre, la céramique, l'argile blanche, la porcelaine, la cristobalite, le feldspath et/ou la craie.

7. Plaque en verre acrylique selon une ou plusieurs des revendications précédentes,
**caractérisée en ce que**
les particules utilisées de matières de charge sont des matières de charge en couches.

8. Plaque en verre acrylique selon une ou plusieurs des revendications précédentes,
**caractérisée en ce que**
la granulométrie moyenne de la matière de charge utilisée se situe entre de 0,01 µm et 80 µm, en particulier entre 0,05 µm et 30 µm, de préférence à toutes les manières appropriées gamme de 0,1 µm et 20 µm.

9. Plaque en verre acrylique selon une ou plusieurs des revendications précédentes,
**caractérisée en ce que**
la matière de charge est une association de talc et de dolomite, le cas échéant en mélange avec de l'hydroxyde d'aluminium.

10. Plaque en verre acrylique selon une ou plusieurs des revendications précédentes, obtenue par polymérisation d'un système (méth)acrylate dans un procédé de moulage, de préférence selon le procédé en chambre ou une modification de celui-ci, selon lequel le système polymérisable contient :
A)
| | |
|---|---|
| a) (Méth)acrylate | 50 % - 100 % en poids |
| a1) Méthyl(méth)acrylate | 0 % - 99,99 % en poids |
| a2) (Méth)acrylate en C₂-C₄ | 0 % - 99,99 % en poids |
| a3) (Méth)acrylate ≥ en C₅ | 0 % - 50 % en poids |
| a4) (Méth)acrylate polyvalent | 0,01 % - 50 % en poids |
| b) Comonomères | 0 % - 50 % en poids |
| b1) Aromates vinyliques | 0 % - 50 % en poids |
| b2) Esters vinyliques | 0 % - 50 % en poids |
les composants a) et b) étant choisis de façon qu'ils produisent ensemble 100 % en poids du composant A) polymérisable,
B) pour 1 part en poids de A), 0 - 12 parts en poids d'un (pré)polymère soluble ou gonflable dans A),
C) un initiateur en une quantité suffisante pour le durcissement du composant A),
D) le cas échéant, des moyens pour ajuster la viscosité du système,
E) des additifs usuels en une quantité maximale de 3 parts en poids pour 1 part en poids de A), et
et
F) 0,33 à 4 parts en poids de matières de charge pour 1 part en poids de liant (somme de A) à E)),
et la viscosité du système (méth)acrylate avant la polymérisation est supérieure à 0,1 Pa·s (supérieure à 100 cP).

11. Plaque en verre acrylique selon une ou plusieurs des revendications précédentes 1 à 10,
**caractérisée en ce qu'**
elle présente, pour la liaison des éclats en cas de rupture, des fils d'acier intégrés dans la matrice en matière plastique fortement chargée, que de la matière plastique enveloppe éventuellement, de préférence qui sont enveloppés de matière plastique constituée de polyamide.

12. Procédé de fabrication d'une plaque en verre acrylique selon une ou plusieurs des revendications 1 à 11, selon lequel
a) prépare une composition de (méth)acrylate chargée, polymérisable,
b) on coule la composition préparée dans un moule préparé dans lequel les fils, les bandes, les grillages ou les treillis prévus pour l'intégration sont positionnés
c) on polymérise la composition dans le moule à une température supérieure à la température ambiante en obtenant une plaque, et
d) on démoule la plaque,
**caractérisé en ce qu'**
on ajuste la viscosité de la composition de (méth)acrylate fortement chargée, polymérisable, avant la polymérisation dans le moule, à une valeur supérieure à 0,1 Pa•s.

13. Procédé selon la revendication 12,
**caractérisé en ce qu'**
on régule la viscosité de la composition par variation du rapport de poids du (pré)polymère aux monomères polymérisables dans la composition.

14. Procédé selon la revendication 12 ou 13,
**caractérisé en ce qu'**
on régule la viscosité de la composition par variation de la proportion de moyens ajustant la viscosité.

15. Utilisation d'une plaque en verre acrylique selon les revendications précédentes 1 à 12 en tant qu'élément insonorisant non transparent dans des parois d'insonorisation.
